# EUROPEAN PATENT APPLICATION

(11) **EP 2 644 865 A2**
(43) Date of publication of application: **02.10.2013**
(21) Application number: 13160307.8
(22) Date of filing: 21.03.2013
(51) Int. Cl.: F02C 7/26, F02C 9/28

(54) **Method of startup control for a gas turbine system operating in a fired deceleration shutdown process mode**

(30) Priority: 26.03.2012 US 201213430019
(71) Applicant: General Electric Company, Schenectady, New York 12345 (US)
(72) Inventor: Morawski, Christopher John, Schenectady, NY New York 12345 (US); Snider, David August, Greenville, SC South Carolina 29615 (US); Post, Eugene Armstead, Schenectady, NY New York 12345-6000 (US)
(74) Representative: Cleary, Fidelma

(57) **Abstract**

A method of startup control for a gas turbine system that is operating in a fired deceleration shutdown process mode (24) is provided. The method includes determining whether the combustor flame is in a lit state (26). Also included is increasing a fuel flow to the gas turbine system if the combustor is determined to be in the lit state (26). Further included is initiating (28) a starter system to the gas turbine system.

## Description

The subject matter disclosed herein relates to gas turbine systems, and more particularly to a method for starting and/or restarting operation of gas turbine systems.

Typically, gas turbine controls require a gas turbine system to complete a lengthy shutdown sequence prior to initiating a restart procedure. Often, this requires a fired deceleration to a specified low speed where fuel flow is stopped, combustors flame out, and the gas turbine system continues to decelerate to, or near, turning gear speed. Subsequently, the gas turbine system is restarted, which includes the completion for a purging cycle to remove combustibles from the system prior to re-lighting the system.

Efforts to improve on the time required for restart have included control features such as purge credit, faultless shutdown, higher speed light off, increased speed permissives for initiating restart, faster acceleration, and fast load, for example. Each of these features require the gas turbine system to complete a fired deceleration followed by an unfired deceleration, thereby leading to extended restart times and may reduce a power plant's efficiency.

According to one aspect of the invention, a method of startup control for a gas turbine system that is operating in a fired deceleration shutdown process mode is provided. The method includes determining whether the combustor flame is in a lit state. Also included is increasing a fuel flow to the gas turbine system if the combustor is determined to be in the lit state. Further included is initiating a starter system to the gas turbine system.

According to yet another aspect of the invention, a method of startup control for a gas turbine system includes maintaining a lit state of a combustor flame during a fired deceleration shutdown process of the gas turbine system. Also included is confirming that the combustor flame is in the lit state. Further included is initiating a startup procedure comprising engagement of a starter system.

These and other advantages and features will become more apparent from the following description taken in conjunction with the drawings.

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a block diagram generally illustrating a gas turbine system;
FIG. 2 is a flow diagram illustrating a method of restarting a gas turbine system; and
FIG. 3 is a flow diagram illustrating the method of restarting the gas turbine system from distinct operating conditions.

The detailed description explains embodiments of the invention, together with advantages and features, by way of example with reference to the drawings.

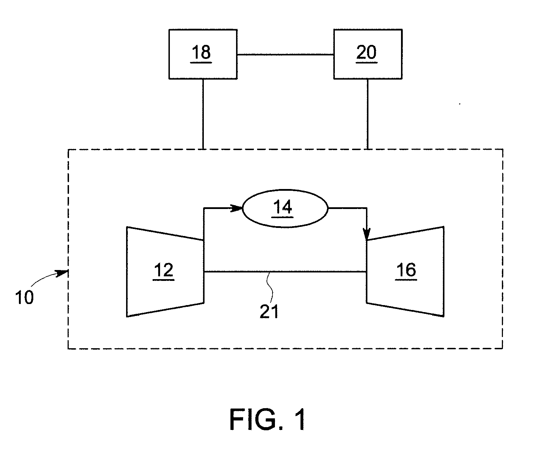

Referring to FIG. 1, a gas turbine system is illustrated generally at 10 and comprises a compressor 12, a combustor 14 and a turbine 16. The gas turbine system 10 also includes a control system 18 for performing various operations associated with operation of the gas turbine system 10. The control system 18 includes a starter system 20, such as a static starter or a starting motor starter system, for example, for imparting operational control over the gas turbine system 10. It is to be understood that the starter system generally refers to any system, device or mechanism that assists in acceleration of the gas turbine system 10. The gas turbine system 10 is operated at a constant speed while load demand varies, while a typical shutdown process includes reducing the speed of the gas turbine system 10 to a part speed condition where the combustor 14 is extinguished. The deceleration of the gas turbine system 10 continues until zero or near zero speed.

In operation, air flows into the compressor 12 and is compressed into a high pressure gas. The high pressure gas is supplied to the combustor 14 and mixed with a combustible fuel, such as natural gas, for example, in the combustor 14. The fuel and compressed air are passed into the combustor 14 and ignited to form a high temperature, high pressure combustion product or air stream that is used to drive the turbine 16. The turbine 16 includes a plurality of rotating assemblies or stages that are operationally connected to the compressor 12 through a compressor/turbine shaft or rotor 21.

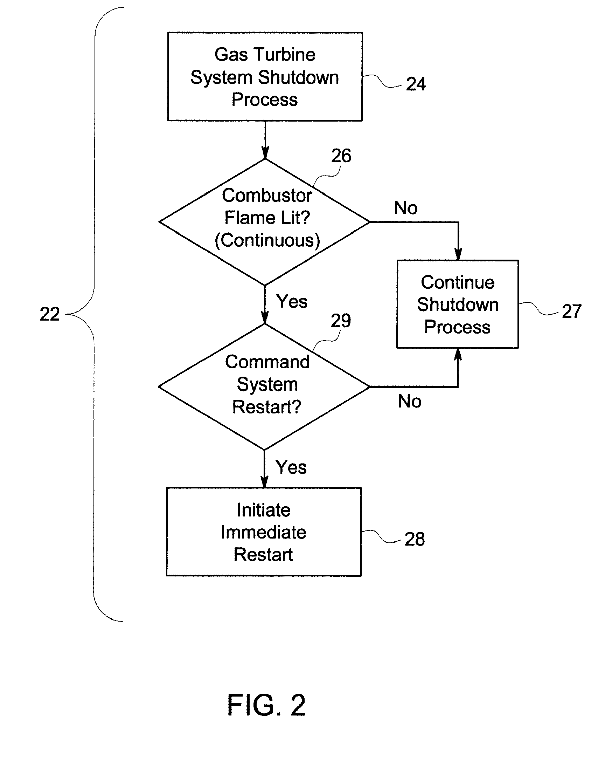

Referring to FIG. 2, a flow diagram illustrates a method of startup control 22 for the gas turbine system 10 while the gas turbine system 10 is in a shutdown process 24, and more specifically while the gas turbine system 10 is decelerating. During the shutdown process 24, the combustor flame remains lit until a specified lower speed is reached during the deceleration. Typically, this specified speed is approximately 15% to 20% of the full speed of the gas turbine system 10, however, an exact flame out speed will vary based on numerous conditions associated with operation of the gas turbine system 10. Irrespective of the precise flame out speed, the exemplary method provides an operator the ability to initiate an immediate restart of the gas turbine system 10 at any point in the shutdown process 24 while the combustor remains lit. Such a capability alleviates the need to complete a full shutdown process, thereby saving time and increasing overall efficiency of an application associated with the gas turbine system 10, such as a power plant. Specifically, the method improves availability, reduces down time and improves revenue service.

The method includes determining whether the combustor flame is in a lit state, represented as 26. Although indicated only as a single determination in the illustrated flow diagram (FIG. 2), it is to be understood that this is a continuous checking during the shutdown process to verify that the combustor is lit. If flame out has not occurred and the combustor flame is in the lit state, an immediate restart of the gas turbine system 10 may be initiated 28, upon appropriate command 29. If, however, the combustor is determined to be in an unlit state at any point during the shutdown process, continuation of the shutdown process 27 ensues. Confirmation of a lit state is achieved by monitoring of various detectors, including flame detectors, exhaust temperature spreads, and adjacent exhaust thermocouples, for example. The above-noted detectors are merely illustrative and it should be appreciated that numerous alternative detectors may be employed to monitor the combustor flame and to establish a permissive for initiation of immediate restart. Specifically, the term "determine" is meant to refer to any method of reliably confirming that the combustor is in the lit state and may be inferred by reliance on a control system or input parameter, as well as making the determination subsequent to an immediate restart attempt, such as by monitoring turbine exhaust temperature, for example.

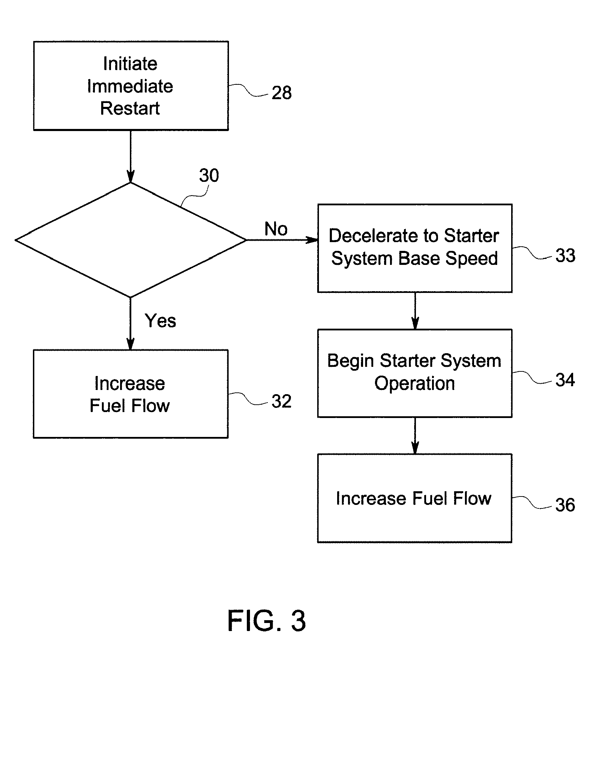

Referring now to FIG. 3, an immediate restart initiation 28 is followed by determining the turbine speed of the gas turbine system 10, with the determination referred to as 30. At relatively high turbine speeds of greater than 80%, and more typically of greater than 85%, the gas turbine system 10 can be restarted without the employment of the starter system 20, however, the speed may be 50% or lower in certain applications. At such speeds, merely increasing fuel flow 32 and use of the control system 18 is sufficient to reverse the shutdown process 24 and initiate the immediate restart of the gas turbine system 10.

In the event the turbine speed of the gas turbine system 10 is below a speed sufficient for restart without the starter system 20, the shutdown process 24 continues until an engagement speed of the starter system 20 is reached. The deceleration to the engagement speed of the starter system 20 is referred to as 33. The engagement speed refers to any speed where the starting system 20 can safely begin operation. This range may vary and for some applications, such a speed occurs at or below a turbine speed of approximately 35%. Although the engagement speed of the starter system 20 is described as being at or below 35%, it is contemplated that such a speed may be increased to allow the immediate restart, with employment of the starter system 20, at higher speeds, thereby decreasing the time required to decelerate to the engagement speed of the starter system 20. To facilitate restart of the gas turbine system 10, in conjunction with starting the starter system 20, represented as 34, the fuel flow is increased 36. Additionally, the starter system 20 may be started in a regenerative mode in situations where the gas turbine system 10 is at a speed below the speed that does not require the starting system 20. In such a situation, the starting system 20 is used in a regenerative mode to increase the deceleration rate of the turbine to a speed where the gas turbine system 10 can then initiate restart of the system. The rate of fuel flow varies at different operating speeds and conditions, but an illustrative fuel flow and increase may be increasing from 0.5 lbm/s to 1.0 lbm/s at an operating speed of 30%.

Advantageously, the method of startup control for the gas turbine system 10 provides the ability to halt a shutdown process and immediately transition to a restart procedure. Such a transition increases efficiency by improving availability, reducing down time and improving revenue service. The method enables an application associated with the gas turbine system 10, such as a power plant, to begin operating at a desired condition significantly faster than would otherwise be the case. The immediate restart when the combustor flame is in the lit state obviates the common requirement to complete the shutdown process that includes a fired deceleration, followed by a complete unfired deceleration. By removing the unfired deceleration process, which includes various procedures including, but not limited to, a purge cycle, for example, the overall system is saved valuable time and resources associated with the complete shutdown process.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method of startup control for a gas turbine system comprising:
   maintaining a lit state of a combustor flame during a fired deceleration shutdown process of the gas turbine system;
   confirming that the combustor flame is in the lit state; and
   initiating a startup procedure comprising starting a starter system.
2. The method of clause, wherein determining whether the combustor flame is in the lit state confirms a lit state.
3. The method of any preceding clause, wherein the lit state of the combustor flame ranges from a speed of greater than approximately 15%.
4. The method of any preceding clause, wherein initiating the startup procedure occurs below a first speed capable of turbine acceleration without the starter system.
5. The method of any preceding clause, further comprising increasing a fuel flow to the gas turbine system while the combustor flame is in the lit state.
6. The method of any preceding clause, wherein the starter system is started in a regenerative mode.

## Claims

1. A method of startup control for a gas turbine system (10) that is operating in a fired deceleration shutdown process mode, comprising:
determining (30) whether the combustor flame is in a lit state (26);
increasing (36) a fuel flow (32) to the gas turbine system (10) if the combustor (14) is determined to be in the lit state (26); and
initiating (28) a starter system (20) to the gas turbine system (10).

2. The method of claim 1, wherein determining (30) whether the combustor (14) flame is in the lit state (26) confirms a lit state (26).

3. The method of claim 1 or 2, further comprising determining whether the gas turbine system (10) is operating at or above a first speed where the system is capable of turbine acceleration without the starter system (20).

4. The method of claim 3, further comprising immediately increasing (36) the fuel flow (32) if the gas turbine system (10) is determined to be operating at or above the first speed.

5. The method of claim 3 or 4, further comprising decelerating (33) the gas turbine system (10) to a starter system engagement speed if the turbine system (10) is operating below the first speed.

6. The method of claim 5, wherein the starter system (20) engagement speed corresponds to a speed of less than about 35%.

7. The method of claim 6, further comprising initiating (28) the starter system (20) and increasing (36) the fuel flow (32).

8. The method of any preceding claim, wherein the lit state (26) of the combustor flame ranges from a speed of greater than approximately 15%.

9. The method of any preceding claim, wherein the starter system (20) is started in a regenerative mode.
